# EUROPÄISCHE PATENTANMELDUNG

(11) **EP 4 707 000 A1**
(43) Veröffentlichungstag der Anmeldung: **11.03.2026**
(21) Anmeldenummer: 25199655.9
(22) Anmeldetag: 02.09.2025
(51) Int. Cl.: B60D 1/01, B60D 1/64, B62D 53/12

(54) **GESPANN, VERBINDUNGSSYSTEM UND VERFAHREN ZUM KUPPELN EINES ZIEHENDEN FAHRZEUGS MIT EINEM GEZOGENEN FAHRZEUG**

(30) Priorität: 04.09.2024 DE 102024125328
(71) Anmelder: JOST-Werke Deutschland GmbH, 63263 Neu-Isenburg (DE)
(72) Erfinder: Bastron, Alexander, 64285 Darmstadt (DE); Algüera Gallego, José Manuel, 63739 Aschaffenburg (DE)
(74) Vertreter: WSL Patentanwälte Partnerschaft mbB

(57) **Zusammenfassung**

Die vorliegende Erfindung betrifft ein Gespann, ein Verbindungssystem und ein Verfahren zum Kuppeln eines ziehenden Fahrzeugs mit einem gezogenen Fahrzeug.

## Beschreibung

Die vorliegende Erfindung betrifft ein Gespann, ein Verbindungssystem und ein Verfahren zum Kuppeln eines ziehenden Fahrzeugs mit einem gezogenen Fahrzeug.

Ein Gespann umfasst ein ziehendes Fahrzeug und mindestens ein gezogenes Fahrzeug. Beispiele für ziehende Fahrzeuge sind Zugfahrzeuge eines Sattelzugs oder Motorwagen eines Gliederzugs sowie Wechselbrücken-LKWs. Beispiele für gezogene Fahrzeuge sind dementsprechend Sattelauflieger eines Sattelzugs, Anhänger eines Gliederzugs und Wechselbrücken.

Ein Zugfahrzeug und ein Sattelauflieger bilden einen Sattelzug, bei dem das mechanische Kupplungssystem eine auf dem Zugfahrzeug angeordnete Sattelkupplung und einen an der Unterseite des Sattelaufliegers befindlichen, mit der Sattelkupplung in Eingriff bringbaren und verriegelbaren Königszapfen aufweist. Die Sattelkupplungsplatte ist zum Ankuppeln des Sattelaufliegers üblicherweise mit einer in Fahrtrichtung keilförmig zulaufenden Einfahröffnung ausgebildet, wobei die Einfahröffnung einen freien Bauraum mit mindestens einer Bauraumtiefe aufweist, die ein Ein- und Ausfahren des Königszapfens in die Sattelkupplung gewährleistet. Während des Ankuppelns gleitet der Sattelauflieger hinsichtlich seiner vertikalen Ausrichtung auf der Oberfläche der Sattelkupplungsplatte. Die seitliche Führung wird über den Königszapfen gewährleistet, der während des Ankuppelns in der Einfahröffnung bis zum Erreichen seiner Verriegelungsposition zwangsgeführt ist. Ein Verfahren zum Kuppeln von Sattelzugmaschine und Sattelauflieger ist aus der KR 20200060650 A bekannt.

Analog dazu bilden ein Motorwagen und ein Anhänger einen Gliederzug, bei dem das mechanische Kupplungssystem eine dem Motorwagen zugeordnete Anhängekupplung oder Bolzenkupplung mit Fangmaul und eine dem Anhänger zugeordnete Deichsel mit Zugöse aufweist.

Solche Gespanne sind für den Warentransport von großer Bedeutung. Dabei ist es üblich, dass ein ziehendes Fahrzeug und ein gezogenes Fahrzeug kein unveränderbares Gespann bilden, sondern je nach Bedarf ein ziehendes Fahrzeug mit verschiedenen gezogenen Fahrzeugen gleicher Art verbunden werden kann. Am Ende einer Fahrt stellt das ziehende Fahrzeug das gezogene Fahrzeug üblicherweise ab. Während das gezogene Fahrzeug be- oder entladen wird, kann mit dem ziehenden Fahrzeug ein anderes gezogenes Fahrzeug bewegt werden Ziehendes Fahrzeug und gezogenes Fahrzeug werden also regelmäßig verbunden und getrennt. Dadurch gibt es im Allgemeinen mehr gezogene Fahrzeuge als ziehende Fahrzeuge. Damit Sattelauflieger abgestellt werden können, weisen sie in der Regel Stützwinden auf, welche die Stützfunktion übernehmen während kein ziehendes Fahrzeug mit dem Sattelauflieger gekuppelt ist.

Gespanne werden sowohl in kontrollierten Umgebungen, wie beispielsweise einem Containerterminal, als auch in öffentlichen Umgebungen, also auf Straßen, eingesetzt. In den kontrollierten Umgebungen herrschen oftmals Bedingungen, die enger eingrenzbar sind. Es gibt dort also weniger Störeinflüsse wie Verkehrsteilnehmer, die nicht Teil des Warentransportsystems sind, Unebenheiten, überraschende Straßensperrungen, etc. Dafür sind die Anforderungen an die Zuverlässigkeit innerhalb kontrollierter Umgebungen wesentlich höher.

Neben der mechanischen Verbindung werden das ziehende Fahrzeug und das gezogene Fahrzeug zur Übertragung verschiedener Medien, insbesondere Druckluft und elektrischer Energie, miteinander verbunden. In jüngerer Vergangenheit erfolgte zunehmend auch eine Datenverbindung zwischen ziehendem und gezogenem Fahrzeug. Für die Übertragung der Medien weisen die Fahrzeuge oftmals Stecker und Steckerbuchsen auf, an denen Übertragungsleitungen angebracht werden können.

Das Anbringen und Abnehmen der Übertragungsleitungen ist eine zeitaufwendige Maßnahme, die oft manuell durchgeführt wird. Dabei muss eine Person zwischen die Fahrzeuge klettern und die Leitungen manuell handhaben. Abgesehen davon, dass der Bereich zwischen den Fahrzeugen oft schmutzig ist, gibt es dort auch Verletzungsrisiken. Daher ist es wünschenswert, das Verbinden der Fahrzeuge hinsichtlich einer Übertragung von Medien wie Druckluft, elektrischer Energie und Daten zu automatisieren.

Zwei Systeme zur Automatisierung sind aus WO 2022/150720 A2 und US 11,560,188 B2 bekannt. Beide Systeme sind anfällig gegenüber Umwelteinflüssen wie Regen oder Schmutz. Zudem ist fraglich, inwieweit die Verbindung, wie sie in Figur 3c der US 11,560,188 B2 gezeigt ist, einerseits flexibel genug ist, um Bewegungen des Aufliegers gegenüber dem Zugfahrzeug mitzumachen, und andererseits starr genug ist, damit die Steckverbindung überhaupt automatisch hergestellt werden kann.

Die DE 10 2021 209 167 A1 und die US 2011/0037241 A1 offenbaren jeweils ein Verbindungssystem für die Verbindung einer Zugmaschine mit einem Anhänger.

Die US 2024/0075778 A1 und die WO 2019/165147 A1 offenbaren jeweils ein System zum Verbinden von Gladhand-Kupplungen.

Es ist daher Aufgabe der Erfindung, die Automatisierung der Medienverbindung zwischen einem ziehenden Fahrzeug und einem gezogenen Fahrzeug eines Gespanns zu verbessem und insbesondere sicherzustellen, dass die Verbindung einerseits reproduzierbar hergestellt wird und andererseits den mechanischen Anforderungen im täglichen Gebrauch genügt.

Diese Aufgabe wird durch ein Gespann gemäß Anspruch 1 gelöst.

Das Gespann umfasst ein ziehendes Fahrzeug und ein gezogenes Fahrzeug, wobei das ziehende Fahrzeug und das gezogene Fahrzeug jeweils Schnittstellen zur Übertragung von elektrischer Energie, Druckluft und/oder Daten aufweisen. Der Begriff gezogenes Fahrzeug schließt dabei nicht aus, dass das betroffene Fahrzeug eigene Motoren für die Antriebsachsen umfasst.

Das Gespann umfasst ferner ein mehrteiliges Verbindungssystem, das eine erste Steckeinheit umfasst, die mit den Schnittstellen des ziehenden Fahrzeugs verbunden ist, und eine zweite Steckeinheit umfasst, die mit den Schnittstellen des gezogenen Fahrzeugs verbunden ist. Unter einer Schnittstelle kann ein Bauteil verstanden werden, welches ein schnelles Trennen und Verbinden von zwei Abschnitten einer Leitung ermöglicht, wie beispielsweise ein Stecker oder eine Steckerbuchse. Eine Schnittstelle kann jedoch auch vorhanden sein, wenn zwei Teile dauerhaft über eine Leitung miteinander verbunden sind. Beispielsweise kann ein Steuergerät des ziehenden Fahrzeugs fest mit der ersten Steckeinheit verdrahtet sein.

Die erste Steckeinheit kann mit der zweiten Steckeinheit temporär verbunden werden, um eine Übertragung von elektrischer Energie, Druckluft und/oder Daten zwischen dem ziehenden Fahrzeug und dem gezogenen Fahrzeug zu ermöglichen.

Das Gespann umfasst ferner eine Transporteinrichtung, welche die erste Steckeinheit derart zu der zweiten Steckeinheit bewegen kann, dass anschließend ein Steckvorgang zwischen erster Steckeinheit und zweiter Steckeinheit erfolgen kann (Transportvorgang). Die Transporteinrichtung ist bevorzugt Teil des ziehenden Fahrzeugs. Das Gespann umfasst ferner eine Unterstützungseinrichtung, welche den Steckvorgang zwischen erster Steckeinheit und zweiter Steckeinheit mechanisch unterstützt, also insbesondere eine Kraft ausübt, welche den Steckvorgang unterstützt. Die Unterstützungseinrichtung ist bevorzugt teilweise unabhängig von der Transporteinrichtung. Der Transportvorgang und der Steckvorgang sind Teile des gesamten Verbindungsvorgangs der beiden Steckeinheiten. Als Unterstützungseinrichtung wird vorzugsweise eine Mechanik vorgesehen, die von einem Stellantrieb, insbesondere einem Motor, unterstützt wird.

Durch die Unterstützungseinrichtung wird sichergestellt, dass der Steckvorgang vollzogen wird, sodass Medien zwischen den Fahrzeugen übertragen werden können. Die Unterstützungseinrichtung kann dabei so ausgestaltet werden, dass sie den mechanischen Anforderungen genügt, insbesondere wenn sie unabhängig von der Transporteinrichtung vorgesehen wird.

Die Steckeinheiten weisen bevorzugt mehrere Steckkontakte auf. Bei den Steckkontakten kann es sich beispielsweise um Pins und Pinaufnahmen handeln. Die Pins können zum Übertragen von elektrischer Energie, Druckluft und Daten geeignet sein. Die Steckkontakte ragen bevorzugt von einem Grundkörper der jeweiligen Steckeinheit in eine Richtung weg. Die Steckkontakte bieten einen Widerstand gegenüber dem Steckvorgang, der überwunden werden muss, um den Steckvorgang abzuschließen. Die Steckkontakte einer Steckeinheit sind bevorzugt zu einer Steckgruppe zusammengefasst, sie werden also gleichzeitig mit den Steckkontakten der jeweils anderen Steckeinheit verbunden. Das Verbinden einzelner Steckkontakte mit dem jeweiligen Partner an der anderen Steckeinheit ist dadurch nicht nötig und auch nicht möglich.

Zusätzlich oder alternativ zu den Steckkontakten können die Steckeinheiten auch andere Übertragungselemente aufweisen, beispielsweise einen Sender und einen Empfänger eines kontaktlosen Kommunikationssystems, beispielweise entsprechend WO 2020/016420 A2.

Die Transporteinrichtung umfasst bevorzugt einen Handhabungsroboter, besonders bevorzugt einen Gelenkarmroboter. Durch einen Gelenkarmroboter kann die erste Steckeinheit besonders präzise zu der zweiten Steckeinheit transportiert werden. Dadurch wird sichergestellt, dass die Steckeinheiten für den anschließenden Steckvorgang richtig positioniert sind. Der Steckvorgang kann teilweise auch durch die Transporteinrichtung bewirkt werden. Auch in diesem Fall ist ein Gelenkarmroboter besonders gut geeignet, da ein Gelenkarmroboter in der Lage ist, eine gewisse Stecckraft aufzubringen und diese in einer vorgegebenen Richtung auszuüben.

Die Transporteinrichtung ist bevorzugt temporär mit der ersten Steckeinheit verbunden und kann von dieser gelöst werden. Das ermöglicht es der Transporteinrichtung, sich nach dem Steckvorgang von der ersten Steckeinheit wegzubewegen, beispielsweise in eine Standby-Position. Hierdurch kann vermieden werden, dass die Transporteinrichtung während der Fahrt beschädigt wird. Besonders bevorzugt weist die erste Steckeinheit einen Halter und die Transporteinrichtung einen Greifer zum Greifen des Halters auf. So ist sichergestellt, dass die Transporteinrichtung die erste Steckeinheit wiederholt sicher greifen und anschließend zu der zweiten Steckeinheit hin oder von dieser weg transportieren kann. Der Greifer und der Halter werden beim Halten bevorzugt formschlüssig miteinander verbunden.

Die Unterstützungseinrichtung wird bevorzugt von Teilen der ersten Steckeinheit und von Teilen der zweiten Steckeinheit gebildet, die gemeinsam den Steckvorgang mechanisch unterstützen. Vorteilhafterweise wirken die Teile dabei so zusammen, dass sie die erste Steckeinheit und die zweiten Steckeinheit in einer Steckrichtung zusammenziehen. Bei bevorzugten Ausführungsformen umfasst die Unterstützungseinrichtung zwei komplementäre Gewindeteile und einen Motor, wobei der Motor mindestens eines der Gewindeteile drehen kann. Wenn die Transporteinrichtung die erste Steckeinheit zu der zweiten Steckeinheit bewegt, die Steckeinheiten also zusammenbringt, werden die komplementären Gewindeteile miteinander in Kontakt gebracht. Wird dann eines der Gewindeteile gedreht, so werden die Gewindeteile translatorisch relativ zueinander bewegt. Ist eines der Gewindeteile an der ersten Steckeinheit und das zweite Gewindeteil an der zweiten Steckeinheit angeordnet, werden auf diese Weise schlussendlich die Steckeinheiten aufeinander zu bewegt. Dadurch wird der Steckvorgang mechanisch unterstützt. Bei den Gewindeteilen handelt es sich bevorzugt um einen Gewindestift und ein Innengewindeteil. Besonders bevorzugt ist das Innengewindeteil ein Pin mit einem Innengewinde, wobei das Innengewinde komplementär zu dem Gewindestift ist. Der Motor kann beispielsweise ein Elektromotor oder ein Pneumatikmotor sein. Gewindestift, Pin und Steckkontakte verlaufen bevorzugt alle parallel. Die Gewindeteile können auch ein Ritzel und eine Zahnstange sein.

Die Unterstützungseinrichtung kann auch einen Hebel umfassen, der an einer Steckeinheit angebracht ist und mit der anderen Steckeinheit oder einem damit verbundenen Teil derart in Eingriff gebracht werden kann, dass der Steckvorgang durch ein anschließendes Umlegen des Hebels mechanisch unterstützt wird. Aufgrund des Hebels kann dann mit einer geringeren Kraft eine große Steckkraft ausgeübt werden. Der Hebel ist insbesondere ein Kniehebel oder ein Umlenkhebel.

Der Pin steht bevorzugt von dem Grundkörper der zugehörigen Steckeinheit in Steckrichtung weiter vor als sämtliche Steckkontakte dieser Steckeinheit. Dadurch wird sichergestellt, dass der Pin das erste Teil der jeweiligen Steckeinheit ist, die mit der anderen Steckeinheit in Kontakt kommt. Dadurch kann der Steckvorgang frühzeitig und über die gesamte Länge der Steckkontakte mechanisch unterstützt werden.

Der Gewindestift verläuft bei vorteilhaften Weiterbildungen in einer Bohrung, deren Innendurchmesser größer als ein Außendurchmesser des Gewindestifts ist, und ein Außendurchmesser des Pins entspricht im Wesentlichen dem Innendurchmesser der Bohrung. Der Gewindestift wird dadurch von den Umgebungsbedingungen geschützt. Das Zusammenbringen von Pin und Gewindestift ist dennoch leicht möglich, da der Pin beim Steckvorgang in die Bohrung geschoben werden kann.

Mindestens eines der Gewindeteile weist bevorzugt endseitig eine Zentrierhilfe, besonders bevorzugt eine Zentrierfase oder Zentrierspitze, auf. Besonders vorteilhaft trifft das auf beide Gewindeteile zu. Eine Zentrierhilfe unterstützt das Zusammenkommen der Gewindeteile. Durch Ungenauigkeiten bei der Herstellung oder der Montage sowie durch Verschleiß kann es vorkommen, dass die Gewindeteile nicht streng in Steckrichtung verlaufen. Eine Zentrierhilfe bewirkt, dass auch trotz dieser Ungenauigkeiten die jeweiligen Teile wirksam zusammengeführt werden können.

Bei vorteilhaften Weiterbildungen ist mindestens eines der Gewindeteile entlang der Steckrichtung verschiebbar und federnd gelagert. Hierdurch wird das Auftreffen der beiden Gewindeteile abgefedert und zusätzlich wird sichergestellt, dass die Gewindeteile auch nach dem Auftreffen gegeneinandergedrückt werden, wodurch sichergestellt ist, dass die Gewindeteile wirksam ineinandergreifen können, sobald eines der beiden gedreht wird. Zusätzlich kann die verschiebbare Lagerung auch zur Erfassung der Anwesenheit der anderen Steckeinheit genutzt werden. Hierzu ist bevorzugt ein Sensor vorgesehen, der eine Position des Gewindeteils entlang der Steckrichtung erfasst und bevorzugt bei Erreichen einer Sollposition ein Signal an eine Steuereinheit übermittelt. Ist die Sollposition erreicht, kann beispielsweise der Motor derart angesteuert werden, dass er das eine Gewindeteil dreht. So wird sichergestellt, dass der Motor erst dann dreht, wenn die beiden Gewindeteile fest aneinander liegen. Dadurch wird der Energieverbrauch reduziert und ein frühzeitiger Verschleiß der Gewindeteile vermieden.

Alternativ oder zusätzlich kann auch ein Sensor vorgesehen sein, der eine Relativposition der Steckeinheiten entlang der Steckrichtung erfasst und bevorzugt bei Erreichen einer Sollposition ein Signal an eine Steuereinheit übermittelt. Ist die Sollposition erreicht, kann beispielsweise der Motor derart angesteuert werden, dass er das eine Gewindeteil dreht. Der Sensor umfasst bevorzugt ein Sensorelement, das an einer Steckeinheit angeordnet und zum Erfassen eines Elements der anderen Steckeinheit ausgebildet ist. Der Sensor ist bevorzugt an der Steckeinheit angebracht, an welcher der Motor angeordnet ist. So ist eine leichte Ansteuerung des Motors möglich. Der Sensor ist bevorzugt an der ersten Steckeinheit angeordnet, da er dort von dem ziehenden Fahrzeug mit Energie versorgt werden kann.

Das Sensorelement ist bevorzugt ein Hall-Sensor, ein Induktivsensor, ein Reed-Sensor oder ein optischer Sensor, beispielsweise eine Photozelle. Das Element, welches von dem Sensorelement erfasst wird, kann ein zusätzliches Element sein, das hauptsächlich die Funktion erfüllt, von dem Sensorelement detektiert zu werden. Das Sensorelement kann aber auch derart ausgebildet und angeordnet sein, dass ein bereits vorhandenes Teil einer Steckeinheit, beispielsweise der Pin, erfasst wird. Das zu detektierende Element ist bevorzugt an das Sensorelement angepasst, beispielsweise in Form eines Magnets für den Reed-Sensor oder in Form eines Metallteils für den Induktivsensor.

Das Sensorelement kann beispielsweise in der Stirnwand der Steckeinheit angeordnet sein. So kann das Zusammentreffen der Steckeinheiten frühzeitig erkannt werden.

Es ist vorteilhaft, wenn der Motor auf Seiten des ziehenden Fahrzeugs zum Einsatz kommt. Grund dafür ist, dass es in einem Fuhrpark in der Regel weniger ziehende Fahrzeuge als gezogene Fahrzeuge gibt. Ein Teil der gezogenen Fahrzeuge steht also passiv herum. Wenn der Motor auf Seiten des ziehenden Fahrzeugs zum Einsatz kommt, müssen insgesamt weniger Motoren angeschafft werden, was die Gesamtkosten für einen Fuhrpark verringert.

Bei vorteilhaften Weiterbildungen ist vorgesehen, dass der Motor und eines der Gewindeteile permanent an der ersten Steckeinheit befestigt sind. Dies ermöglicht eine kompakte Bauweise der Unterstützungseinrichtung. Bei anderen vorteilhaften Weiterbildungen ist vorgesehen, dass der Motor an der Transporteinrichtung und eines der Gewindeteile an der ersten Steckeinheit befestigt sind und dass die erste Steckeinheit eine Kupplung aufweist, mittels welcher der Motor ein Drehmoment oder eine Kraft auf das Gewindeteil ausüben kann. Hierdurch kann die erste Steckeinheit weniger kleiner ausgestaltet werden, wodurch sie weniger von dem gezogenen Fahrzeug hervorsteht, wenn sie dort angeordnet ist. Die Kupplung kann beispielsweise eine formschlüssige Vierkantverbindung sein.

Alternativ oder zusätzlich zu Gewindeteilen können auch andere Unterstützungseinrichtungen vorgesehen sein. So ist es beispielsweise möglich, einen Pneumatikzylinder vorzusehen, der an einer der Steckeinheiten befestigt ist und bei der Annäherung an die andere Steckeinheit mit dieser gekoppelt wird, insbesondere durch eine Formschlüssige Verbindung (Einhaken). Wird der Zylinder dann eingefahren, werden die Steckeinheiten zusammengezogen. Ebenfalls alternativ oder zusätzlich können schaltbare Magnete verwendet werden, um den Steckvorgang mechanisch zu unterstützen. Ein schaltbarer Magnet (Elektromagnet) umfasst eine Spule, die wahlweise mit einer Energiequelle verbunden oder von dieser getrennt ist. Wird die Spule mit Energie versorgt, so bewirkt sie ein Magnetfeld, welches ein Metallteil der anderen Steckeinheit anzieht. Auch dadurch kann der Steckvorgang mechanisch unterstützt werden.

Um sicherzustellen, dass die Steckverbindung auch während der Fahrt des Gespanns sicher hält, ist bei vorteilhaften Weiterbildungen eine Verriegelung vorgesehen, welche ein Trennen der ersten Steckeinheit von der zweiten Steckeinheit nach dem Steckvorgang verhindert. Die Verriegelung wird bevorzugt dadurch gebildet, dass die Gewindeteile selbsthemmend sind und/oder dass die Verriegelung Rastelemente umfasst. Die Rastelemente sind bevorzugt Rastelemente, die in Steckrichtung und entgegen der Steckrichtung einen überwindbaren Widerstand bieten. Der Widerstand ist bevorzugt derart bemessen, dass der von der Unterstützungseinrichtung überwunden werden kann, gleichzeitig jedoch ausreichend groß ist, um während der Fahrt üblicherweise auftretenden Erschütterungen zu widerstehen. Alternativ oder zusätzlich kann eine Entriegelungseinrichtung vorgesehen sein, welche die Verriegelung überwinden kann. In diesem Fall kann der Widerstand der Verriegelung größer gewählt werden, wodurch eine größere Sicherheit gegen Erschütterungen und dergleichen gegeben ist. Die Verriegelung und die Entriegelungseinrichtung können auch in einer Baugruppe kombiniert werden, beispielsweise durch einen mechanischen Riegel oder eine elektromagnetische Sicherung, die wahlweise aktiviert wird (Verriegelung) und anschließend deaktiviert werden kann (Entriegelung).

Um die Steckkontakte im zusammengesteckten Zustand vor Umwelteinflüssen zu schützen, ist bei vorteilhaften Weiterbildungen vorgesehen, dass die erste Steckeinheit und/oder die zweite Steckeinheit ein Gehäuse umfasst. Das Gehäuse weist bevorzugt einen mit der jeweils anderen Steckeinheit komplementären Querschnitt auf. Hierdurch kann das Gehäuse kompakt ausgebildet werden. Um Fertigungstoleranzen und Verschleiß auszugleichen weist das Gehäuse bevorzugt endseitig Führungselemente (Rampenlaschen) auf, die trichterförmig angeordnet sind. Die Führungselemente führen die jeweils andere Steckeinheit während des Steckvorgangs oder auch schon davor. Dadurch wird der Steckvorgang auch zuverlässiger.

Das Gehäuse ist bevorzugt nach unten offen, insbesondere ausschließlich nach unten offen. Hierdurch wird der Innenraum des Gehäuses und alles, was sich darin befindet, besonders gut vor Regen geschützt. Die Öffnung nach unten bedeutet allerdings, dass der Steckvorgang vertikal nach oben durchgeführt wird, was an sich nicht vorteilhaft wäre, da die Gravitation einen zusätzlichen Widerstand gegen die Steckrichtung darstellt. Durch die Unterstützungseinrichtung ist jedoch auch ein Steckvorgang vertikal nach oben ohne Probleme durchführbar.

Damit die Steckkontakte und ggf. weitere Elemente wie die Gewindeteile vor dem Beginn des Steckvorgangs und insbesondere beim Transportieren der ersten Steckeinheit zu der zweiten Steckeinheit vor Umwelteinflüssen geschützt werden, ist bei vorteilhaften Weiterbildungen vorgesehen, dass die erste Steckeinheit und/oder die zweite Steckeinheit eine Abdeckung für die Stecckontakte aufweist, wobei die Abdeckung bevorzugt einen Abdeckzustand und einen Freigabezustand einnehmen kann, wobei sie in dem Abdeckzustand die Steckkontakte abdeckt und in dem Freigabezustand die Steckkontakte nicht abdeckt. Die Abdeckung kann aktiv geschaltet werden. Bevorzugt ist jedoch vorgesehen, dass die Abdeckung während des Steckvorgangs automatisch von dem Abdeckzustand in den Freigabezustand wechselt. Hierfür kann die Abdeckung schwenkbar gelagert und so angeordnet sein, dass die jeweils andere Steckeinheit während des Steckvorgangs so an ihr angreift, dass sie geschwenkt wird. Hierzu kann die Steckeinheit mit der Abdeckung beispielsweise in ein Gehäuse der anderen Steckeinheit eingeführt werden, wobei die Abdeckung beim Steckvorgang an einer Gehäusewandung kurzzeitig hängen bleibt und dadurch verschwenkt wird.

Um die Steckeinheiten zusammenbringen zu können, ist es zweckmäßig, zumindest die Relativposition der beiden zu kennen. Bei vorteilhaften Weiterbildungen ist daher eine Ortungseinrichtung vorgesehen, mittels der die Position der ersten Steckeinheit und/oder der zweiten Steckeinheit oder deren Relativposition bestimmbar ist. Die Ortungseinrichtung weist bevorzugt eine Kennzeichnung, beispielsweise einen QR-Code, und einen Detektor, beispielsweise eine Kamera, zum Erfassen der Kennzeichnung auf. Die Kennzeichnung ist bevorzugt an der ersten Steckeinheit oder der zweiten Steckeinheit angeordnet. Die Position der ersten Steckeinheit auf dem ziehenden Fahrzeug ist oftmals bekannt. Das gilt insbesondere, wenn die erste Steckeinheit von einem Gelenkarmroboter gehalten wird. In diesem Fall ist es besonders zweckmäßig, die Kennzeichnung an der zweiten Steckeinheit anzubringen und den Detektor an dem ziehenden Fahrzeug, insbesondere an der Transporteinrichtung. Der Detektor kann dann die Position oder den Abstand zu der Kennzeichnung ermittelt und die Transporteinrichtung kann anschließend derart angesteuert werden, dass sie die erste Steckeinheit zu der zweiten Steckeinheit bewegt.

Alternativ kann eine Ortung mittels Sender/Empfängereinheiten erfolgen, wie beispielsweise RFID-Elementen.

Die zweite Steckeinheit ist bevorzugt an einer Frontseite des gezogenen Fahrzeugs angeordnet. Dadurch ist sie vergleichsweise leicht zugänglich und gut von der Transporteinrichtung erreichbar. Container werden zum Transport auf einem Unterbau eines gezogenen Fahrzeugs angeordnet. Das Anbringen der zweiten Steckeinheit an den Container ist mitunter nicht möglich oder nicht gewünscht. Daher ist es von Vorteil, die zweite Steckeinheit an einem Unterbau des gezogenen Fahrzeugs anzubringen. So kann der Container ausgetauscht werden, ohne dass die zweite Steckeinheit abgenommen werden muss. Die zweite Steckeinheit kann temporär an dem gezogenen Fahrzeug befestigt sein, beispielsweise durch eine magnetische Verbindung. Sie kann aber auch permanent an dem gezogenen Fahrzeug befestigt sein, beispielsweise kann sie dort festgeschraubt oder festgeschweißt sein.

Das ziehende Fahrzeug ist bevorzugt ein Terminal-Traktor und das gezogene Fahrzeug ist bevorzugt ein Sattelauflieger. Bei Terminal-Traktoren ist die Montagefläche hinter dem Fahrerhaus größer als bei anderen Zugfahrzeugen, wie beispielsweise bei herkömmlichen Sattelschleppern. Terminal-Traktoren werden zum Beispiel in Containerterminals eingesetzt, wo sie Sattelauflieger bewegen und dabei jeweils nur geringe Distanzen absolvieren. Aufgrund der größeren Montagefläche sind Terminal-Traktoren besonders für die Erfindung geeignet, da beispielsweise ein Gelenkarmroboter auf der großen Montagefläche Platz findet.

Auf der Montagefläche des ziehenden Fahrzeugs ist bevorzugt eine Sattelkupplung angeordnet, insbesondere eine höhenverstellbare Sattelkupplung. Das gezogene Fahrzeug weist bevorzugt einen Königszapfen auf.

Die Aufgabe der Erfindung wird auch durch ein Verbindungssystem gelöst, wie es in der obigen Beschreibung definiert ist. Das Verbindungssystem umfasst eine erste Steckeinheit, die mit den Schnittstellen des ziehenden Fahrzeugs verbindbar ist, und eine zweite Steckeinheit, die mit den Schnittstellen des gezogenen Fahrzeugs verbindbar ist. Die erste Steckeinheit kann temporär mit der zweiten Steckeinheit verbunden werden, um eine Übertragung von elektrischer Energie, Druckluft und/oder Daten zwischen dem ziehenden Fahrzeug und dem gezogenen Fahrzeug zu ermöglichen. Das Verbindungssystem umfasst ferner eine Unterstützungseinrichtung, welche den Steckvorgang zwischen erster Steckeinheit und zweiter Steckeinheit mechanisch unterstützt.

Die Aufgabe der Erfindung wird auch durch ein Verfahren zum Kuppeln eines ziehenden Fahrzeugs mit einem gezogenen Fahrzeug mittels einer mechanischen Kupplung und mittels eines mehrteiligen Verbindungssystems nach der obigen Beschreibung gelöst. Dabei wird die erste Steckeinheit mittels der Transporteinrichtung zu der zweiten Steckeinheit bewegt und anschließend erfolgt ein Steckvorgang zwischen erster Steckeinheit und zweiter Steckeinheit, wobei der Steckvorgang zwischen erster Steckeinheit und zweiter Steckeinheit von der Unterstützungseinrichtung mechanisch unterstützt wird. Der Steckvorgang wird dabei bevorzugt von der Transporteinrichtung und der Unterstützungseinrichtung gemeinsam vollzogen.

Das mechanische Kuppeln mittels der mechanischen Kupplung erfolgt bevorzugt vor dem Steckvorgang zwischen erster Steckeinheit und zweiter Steckeinheit. Dadurch wird vermieden, dass sich das gezogene Fahrzeug und das ziehende Fahrzeug während des Transportvorgangs oder des Steckvorgangs voneinander entfernen, wodurch die die Verbindungseinrichtung oder andere Teile von ziehendem und gezogenem Fahrzeug beschädigt werden könnten und der Verbindungsvorgang verzögert würde.

Um die Transporteinrichtung vor Beschädigung zu schützen und die Manövrierfähigkeit des Gespanns nicht zu beeinträchtigen, ist bei vorteilhaften Weiterbildungen vorgesehen, dass die Transporteinrichtung nach dem Steckvorgang oder während des Steckvorgangs von der ersten Steckeinheit getrennt wird. Nach der Trennung kann die Transporteinrichtung in eine Standby-Stellung bewegt werden, in welcher sie weniger Platz einnimmt.

Offenbart wird ferner ein Gespann ohne die Unterstützungseinrichtung, wobei die Steckeinheiten und/oder die Transporteinrichtung abgesehen von der Unterstützungseinrichtung so ausgebildet sind, wie es oben beschrieben ist. Offenbart wird ferner ein Gespann ohne die Transporteinrichtung, wobei die Steckeinheiten und/oder die Unterstützungseinrichtung abgesehen von der Transporteinrichtung so ausgebildet sind, wie es oben beschrieben ist.

Die Erfindung wird anhand der Zeichnungen beispielhaft dargestellt und erläutert. Die nachfolgend aufgeführten Figuren sind in den Zeichnungen dargestellt:
- Figur 1: ein Gespann in einer schematischen Seitenansicht
- Figur 2: ein Verbindungssystem in einer Perspektivansicht in einem getrennten Zustand
- Figur 3: das Verbindungssystem der Figur 2 in einer Perspektivansicht in einem verbundenen Zustand
- Figur 4: eine erste Steckeinheit für das Verbindungssystem der Figur 2 in einer Perspektivansicht
- Figur 5: eine Darstellung des Inneren der ersten Steckeinheit der Figur 4
- Figur 6: eine zweite Steckeinheit für das Verbindungssystem der Figur 2 in einer Perspektivansicht
- Figur 7: eine Darstellung des Inneren der zweiten Steckeinheit der Figur 6
- Figur 8: das Verbindungssystem der Figur 2 im Schnitt in einem getrennten Zustand
- Figur 9: das Verbindungssystem der Figur 2 im Schnitt in einem Übergangszustand
- Figur 10: das Verbindungssystem der Figur 2 im Schnitt in dem verbundenen Zustand

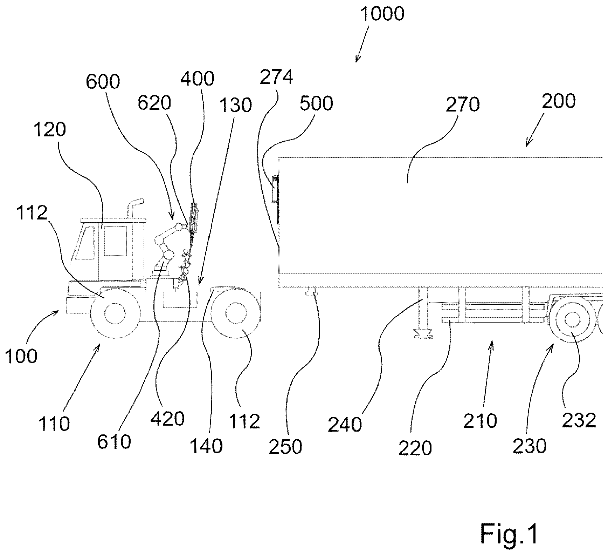

Das in Figur 1 dargestellte Gespann 1000 umfasst einen Terminal-Traktor als ziehendes Fahrzeug 100 und einen Sattelauflieger als das gezogenes Fahrzeug 200. Von dem Sattelauflieger ist nur der vordere Teil dargestellt.

Das ziehende Fahrzeug 100 umfasst ein Fahrwerk 110 mit einem nicht dargestellten Antrieb und vier Rädern 112, eine Fahrerkabine 120 und eine Montagefläche 130. Die Montagefläche 130 befindet sich hinter der Fahrerkabine 120. Bei Terminal-Traktoren ist die Montagefläche 130 größer als bei anderen Zugfahrzeugen, wie beispielsweise herkömmlichen Sattelschleppern. Terminal-Traktoren werden zum Beispiel in Containerterminals eingesetzt, wo sie Sattelauflieger bewegen und dabei jeweils nur geringe Distanzen absolvieren. Auf der Montagefläche 130 ist eine Sattelkupplung 140 angeordnet, die höhenverstellbar ist.

Das gezogene Fahrzeug 200 weist einen Unterbau 210 und einen Aufbau 270 auf. Bei der gezeigten Ausführungsform ist der Aufbau 270 fest mit dem Unterbau 210 verbunden. Der Unterbau 210 umfasst ein Chassis 220, ein Fahrwerk 230 mit Rädern 232, eine Stützwinde 240 und einen Königszapfen 250. Die Stützwinde 240 ist ausgefahren.

Der Königszapfen 250 ist komplementär zu der Sattelkupplung 140 und ermöglicht eine mechanische Kupplung von ziehendem Fahrzeug 100 und gezogenem Fahrzeug 200. Wird ein Sattelauflieger von einem Terminal-Traktor bewegt, so kann durch die höhenverstellbare Sattelkupplung 140 oftmals darauf verzichtet werden, die Stützwinde 240 einzufahren. Nach dem mechanischen Kuppeln wird die Sattelkupplung 140 angehoben, woraufhin sie den Auflieger mit anhebt, bis die Stützwinde 240 den Boden nicht mehr berührt. Sodann kann sich das Gespann 1000 in Bewegung setzen. Da bei Containerterminals und anderen Umschlagplätzen üblicherweise keine Steigungen und Unebenheiten zu bewältigen sind, ist dieses Vorgehen für diese Anwendungsfälle besonders geeignet, da der Verzicht auf das Einfahren der Stützwinden 240 Zeit spart.

Das ziehende Fahrzeug 100 und das gezogene Fahrzeug 200 weisen jeweils Schnittstellen zur Übertragung von elektrischer Energie, Druckluft und Daten auf.

Das in Figur 1 dargestellte Gespann 1000 umfasst ferner ein Verbindungssystem 300 mit einer ersten Steckeinheit 400, einer zweiten Steckeinheit 500 und einer Transporteinrichtung 600, welche die erste Steckeinheit 400 derart zu der zweiten Steckeinheit 500 bewegen kann, dass anschließend ein Steckvorgang zwischen erster Steckeinheit 400 und zweiter Steckeinheit 500 erfolgen kann. Die Transporteinrichtung 600 umfasst einen Gelenkarmroboter 610 mit einem Greifer 620, der auf der Montagefläche 130 des ziehenden Fahrzeugs 100 angeordnet ist.

Der Greifer 620 ist derart ausgebildet, dass er wahlweise mit der ersten Steckeinheit 400 verbunden oder von der ersten Steckeinheit 400 getrennt werden kann. Die erste Steckeinheit 400 weist hierzu einen Halter 460 auf. Der Greifer 620 ist zum Greifen des Halters 460 geeignet.

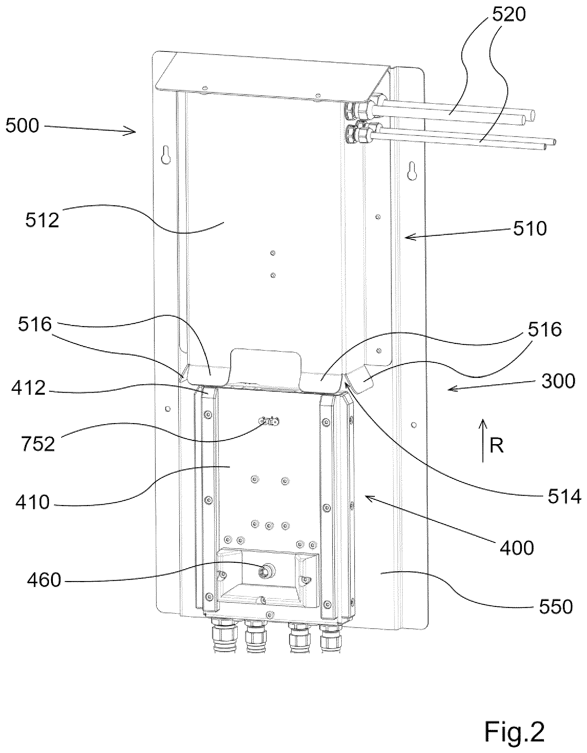

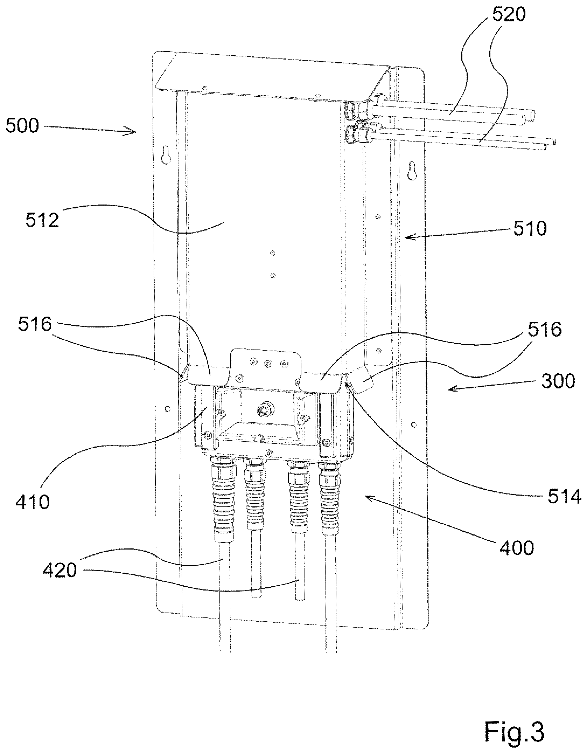

Die erste Steckeinheit 400 ist über flexible Leitungen 420 mit den Schnittstellen des ziehenden Fahrzeugs 100 verbunden und die zweite Steckeinheit 500 ist über Leitungen 520 mit den Schnittstellen des gezogenen Fahrzeugs 200 verbunden. Die erste Steckeinheit 400 wird von der Transporteinrichtung 600 gehalten. Die zweite Steckeinheit 500 ist an einer Frontseite 274 des gezogenen Fahrzeugs 200 angeordnet. Bei der ersten Steckeinheit 400 handelt es sich um einen Stecker und bei der zweiten Steckeinheit 500 um eine Steckerbuchse. Die Steckeinheiten 400, 500 sind komplementär, sodass die erste Steckeinheit 400 mit der zweiten Steckeinheit 500 im Rahmen eines Verbindungsvorgangs temporär verbunden werden kann, um eine Übertragung von elektrischer Energie, Druckluft und Daten zwischen dem ziehenden Fahrzeug 100 und dem gezogenen Fahrzeug 200 zu ermöglichen. Zum Verbinden der Steckeinheiten 400, 500 wird die erste Steckeinheit 400 in einem Transportvorgang zu der zweiten Steckeinheit 500 bewegt (Figur 2). Die Steckeinheiten 400, 500 sind dabei zunächst noch getrennt. Anschließend erfolgt ein Steckvorgang in einer Steckrichtung R (hier vertikal nach oben), durch den die Steckeinheiten 400, 500 miteinander verbunden werden (Figur 3).

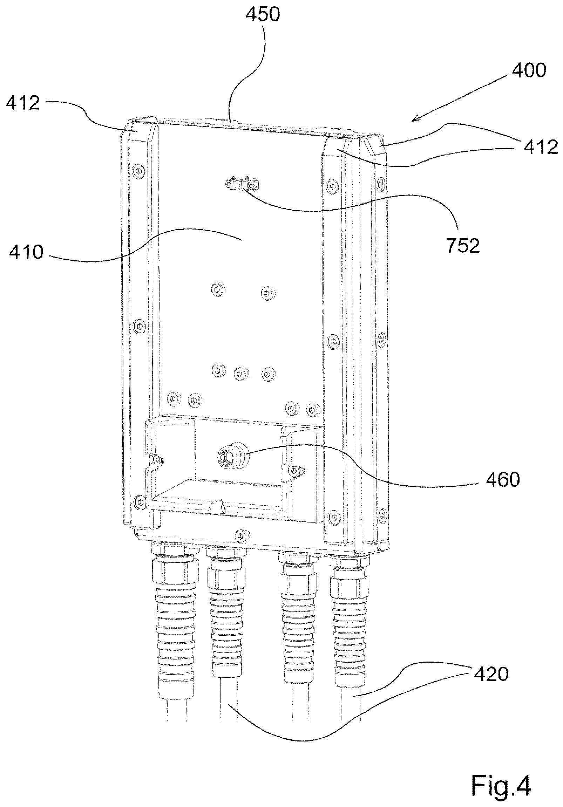

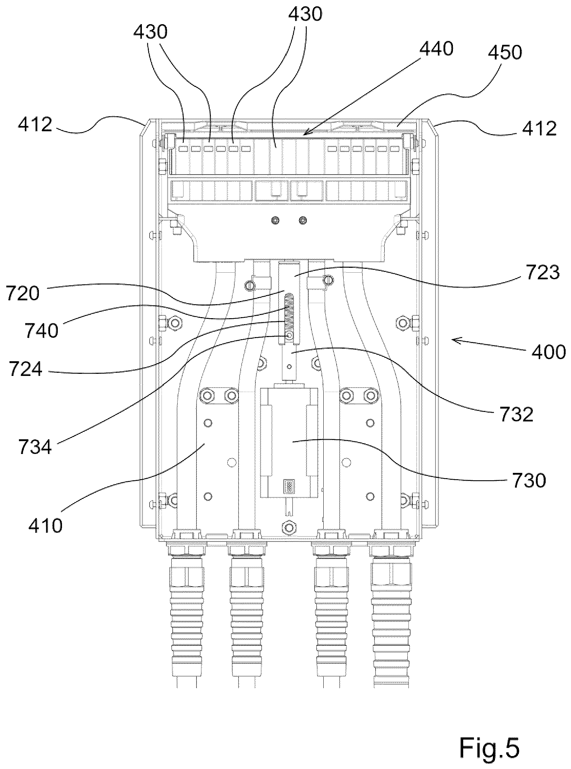

Die erste Steckeinheit 400 ist als Stecker ausgebildet und umfasst ein Gehäuse 410 mit daran angeschlossenen Leitungen 420 (siehe Figur 4). Bei den Leitungen 420 handelt es sich um Energie-, Druckluft- und Datenleitungen. Die Leitungen 420 sind mit den Schnittstellen des ziehenden Fahrzeugs 100 verbunden. Die erste Steckeinheit 400 umfasst ferner Steckkontakte 430, die an einem vorderen Ende vorgesehen sind. Die Steckkontakte 430 sind mit den Leitungen 420 verbunden und jeweils zum Übertragen mindestens eines Mediums (Energie, Druckluft, Daten) an einen komplementären Steckkontakt 530 der zweiten Steckeinheit 500 geeignet. Die Steckkontakte 430 sind zu einer Steckgruppe 440 zusammengefasst. Die Steckkontakte 530 sind zu einer Steckgruppe 540 zusammengefasst (siehe Figur 5).

An dem vorderen Ende umfasst die erste Steckeinheit 400 eine Abdeckung 450, die einen Abdeckzustand und einen Freigabezustand einnehmen kann. In den Figuren 4 und 5 ist jeweils der Abdeckzustand dargestellt. In diesem Zustand deckt die Abdeckung 450 die Steckkontakte 430 ab und schützt diese dadurch vor Umwelteinflüssen. Um in den Freigabezustand zu gelangen, muss die Abdeckung 450 eine Schwenkbewegung vollführen.

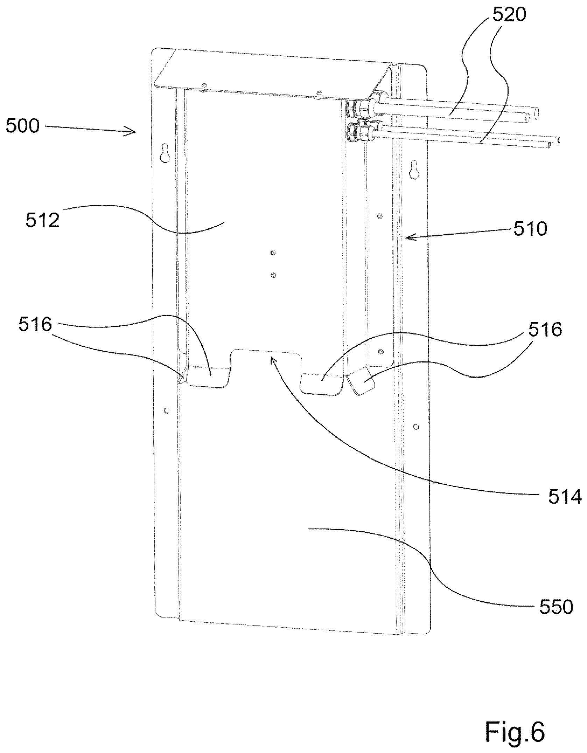

Die zweite Steckeinheit 500 ist als Steckerbuchse ausgebildet und umfasst ein Gehäuse 510 mit daran angeschlossenen Leitungen 520 (siehe Figur 6). Das Gehäuse 510 ist nach unten offen, sodass die erste Steckeinheit 400 von unten durch eine Aufwärtsbewegung in das Gehäuse 510 hineingeschoben werden kann. Das Gehäuse 410 der ersten Steckeinheit 400 umfasst Führungselemente 412 in Form von Einlauffasen, welche das Einführen der ersten Steckeinheit 400 in das Gehäuse 510 der zweiten Steckeinheit 500 unterstützen. Die zweite Steckeinheit 500 umfasst eine Halterung 550, mittels welcher die zweite Steckeinheit 500 an einem gezogenen Fahrzeug (hier nicht dargestellt) angebracht werden kann. Die Halterung 550 ist eine Platte, die einen Teil des Gehäuses 510 ausbildet. Am oberen Ende ist die Platte abgewinkelt und bildet dort einen Vorsprung 560, der das Gehäuse 510 oben abschließt. Der Vorsprung 560 verläuft schräg, damit beispielsweise Regenwasser herunterfließen kann und sich nicht auf dem Vorsprung 560 sammelt. Das Gehäuse 510 wird ferner von einem Aufnahmeteil 512 gebildet, das auf der Platte angeordnet ist und mit der Platte eine Aufnahmeöffnung 514 für die erste Steckeinheit 400 ausbildet. Das Aufnahmeteil 512 weist am unteren Ende Führungselemente 516 in Form von Einlaufnasen auf, welche das Einstecken der ersten Steckeinheit 400 in die zweite Steckeinheit 500 unterstützen.

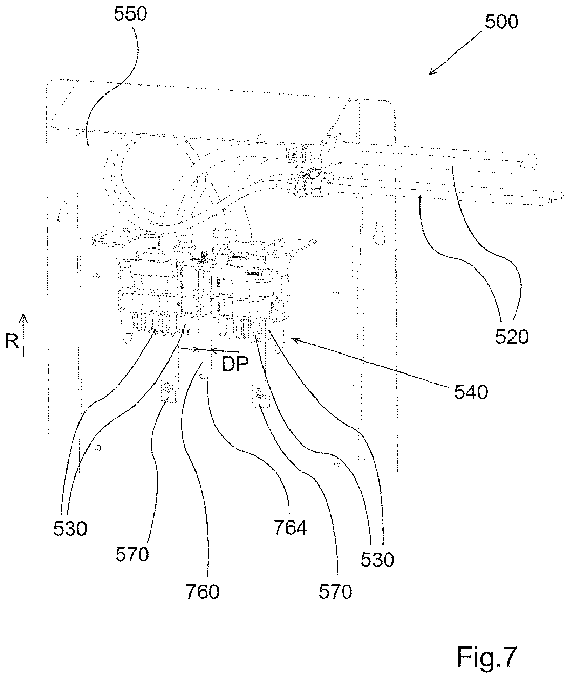

In dem Gehäuse 510 der zweiten Steckeinheit 500 (siehe Figur 7) sind Steckkontakte 530 angeordnet. Die Steckkontakte 530 sind mit den Leitungen 520 verbunden und jeweils zum Übertragen mindestens eines Mediums (Energie, Druckluft, Daten) an einen komplementären Steckkontakt 430 der ersten Steckeinheit 400 geeignet. Die Steckkontakte 430 sind zu einer Steckgruppe 440 zusammengefasst. In Figur 7 ist das Aufnahmeteil 512 ausgeblendet.

Durch den Steckvorgang werden die Steckkontakte 430 der ersten Steckeinheit 400 mit den Stecckontakten 530 der zweiten Steckeinheit 500 derart verbunden, dass eine Übertragung von Energie, Druckluft und Daten ermöglicht wird.

Der Steckvorgang wird mechanisch von einer Unterstützungseinrichtung 700 unterstützt. Die Bestandteile der Unterstützungseinrichtung 700 sind teilweise in die erste Steckeinheit 400 und teilweise in die zweite Steckeinheit 500 integriert. Auf Seiten der ersten Steckeinheit 400 umfasst die Unterstützungseinrichtung 700 eine Bohrung 710, einen Gewindestift 720, einen Motor 730, eine Feder 740 und einen Sensor 750. Auf Seiten der zweiten Steckeinheit 500 umfasst die Unterstützungsreinrichtung 700 einen Pin 760.

Der Gewindestift 720 verläuft konzentrisch in der Bohrung 710. Sowohl die Bohrung 710 als auch der Gewindestift 720 verlaufen in Steckrichtung R. Die Bohrung 710 ist Teil der Steckgruppe 440 der ersten Steckeinheit 400.

Der Gewindestift 720 weist in einem vorderen Bereich 721 einen Gewindeabschnitt 722 und in einem hinteren Bereich 723 eine Nut 724 auf. Der hintere Bereich 723 weist einen größeren Durchmesser auf als der vordere Bereich 721. Die Spitze des vorderen Bereichs 721 ist gefast und dadurch als Zentrierspitze 726 ausgebildet. Die Nut 724 verläuft in Steckrichtung R. Der Motor 730 weist eine Motorwelle 732 und einen Mitnehmer 734 auf, der in der Nut 724 angeordnet ist. Dadurch sind Motor 730 und Gewindestift 720 derart gekoppelt, dass eine Drehung der Motorwelle 732 zu einer Drehung des Gewindestifts 720 führt, gleichzeitig aber eine Relativbewegung in der Steckrichtung R zwischen Gewindestift 720 und Motor 730 möglich ist. Der Motor 730 ist ein Elektromotor. Die Feder 740 ist zwischen Gewindestift 720 und Motor 730 angeordnet und bewirkt, dass der Gewindestift 720 von dem Motor 730 aus nach vorne gedrückt wird. Der Gewindestift 720 ist linear geführt und läuft mit dem hinteren Bereich 723 gegen einen Anschlag 725, welcher die maximale Entfernung des Gewindestifts 720 von dem Motor 730 festlegt.

Der Sensor 750 umfasst ein Sensorelement 752, welches an der ersten Steckeinheit 400 angebracht ist. Im Innern des Gehäuses 510 der zweiten Steckeinheit 500 ist ein Blech 754 angeordnet, welches in den Innenraum des Gehäuses 510 hineinragt. Das Sensorelement 752 ist ein Hall-Sensor. Werden die Steckeinheiten 400, 500 ineinandergesteckt, so wird das Blech 754 bei einer vordefinierten Relativposition der Steckeinheiten 400, 500 durch das Sensorelement 752 bewegt, welches diese Bewegung bzw. die Anwesenheit des Blechs 754 registriert und ein Signal an eine nicht gezeigte Steuereinheit übermittelt. Ist die Sollposition erreicht, wird der Motor 730 derart angesteuert werden, dass er den Gewindestift 720 dreht.

Ferner ist ein Stiftsensor 770 in dem Gehäuse 410 der ersten Steckeinheit 400 angeordnet. Der Stiftsensor 770 ist eingerichtet, ein Signal auszugeben, wenn der Gewindestift 720 über eine vorbestimmte Distanz gegen die Federkraft der Feder 740 in Richtung des Motors 730 bewegt wurde. Hierzu erfasst der Stiftsensor 770 den hintere Bereich 723 des Gewindestifts 720. Das Signal kann an eine Steuereinheit übermittelt werden. Auch dieses Signal kann genutzt werden, um den Motor 730 derart anzusteuern, dass er den Gewindestift 720 dreht.

Der Pin 760 ist im Wesentlichen zylinderförmig und erstreckt sich in Steckrichtung R. Der Pin 760 ist Teil der Steckgruppe 540 der zweiten Steckeinheit 500. Im Gegensatz zu dem Gewindestift 720 ist die Position des Pins 760 in der zweiten Steckeinheit 500 unveränderlich. Der Pin 760 weist ein Innengewinde 762 auf, welches zu dem Gewindeabschnitt 722 komplementär ausgebildet ist. An seiner Spitze weist der Pin 760 eine äußere Zentrierfase 764 auf.

In dem Gehäuse 510 der zweiten Steckeinheit 500 sind ferner zwei Schienen 570 angeordnet. Die Schienen 570 verlaufen parallel zueinander und in Steckrichtung R. Wird die erste Steckeinheit 400 in die zweiten Steckeinheit 500 hineingeschoben, so bleibt die Abdeckung 450 an den Schienen 570 hängen und wird dadurch geöffnet.

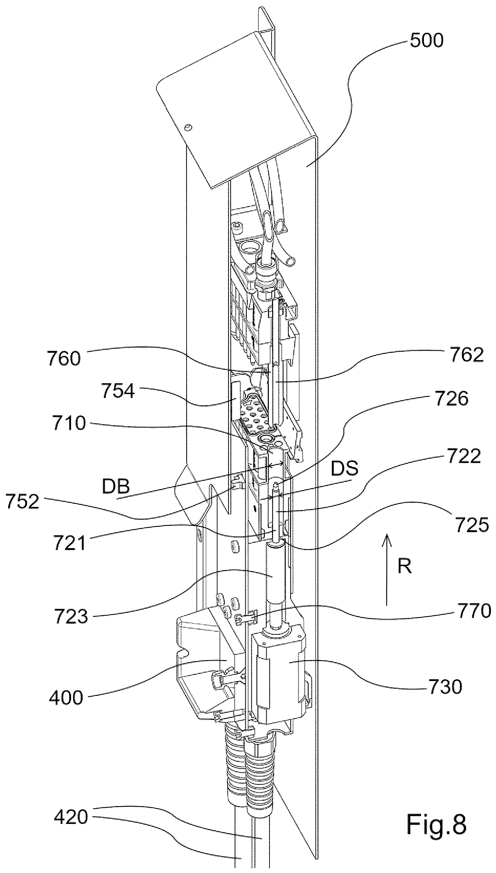

Der Steckvorgang ist in den Figuren 8, 9 und 10 näher dargestellt. In Figur 8 ist die erste Steckeinheit 400 bereits teilweise in die zweite Steckeinheit 500 hineingeschoben worden. Beim Hineinschieben kommt die Abdeckung 450 mit den Schienen 570 in Kontakt und wird dadurch in den Freigabezustand geschwenkt. Die Figur 8 zeigt den Zustand unmittelbar bevor die Steckgruppen 440, 540 miteinander in Kontakt kommen. Wird die erste Steckeinheit 400 weiter in der Steckrichtung R bewegt, so tritt als erstes der Pin 760 in die Bohrung 710 ein. Falls Pin 760 und Bohrung 710 nicht vollständig fluchten, so bewirkt die Zentrierfase 764 eine Zentrierung des Pins 760 in der Bohrung 710.

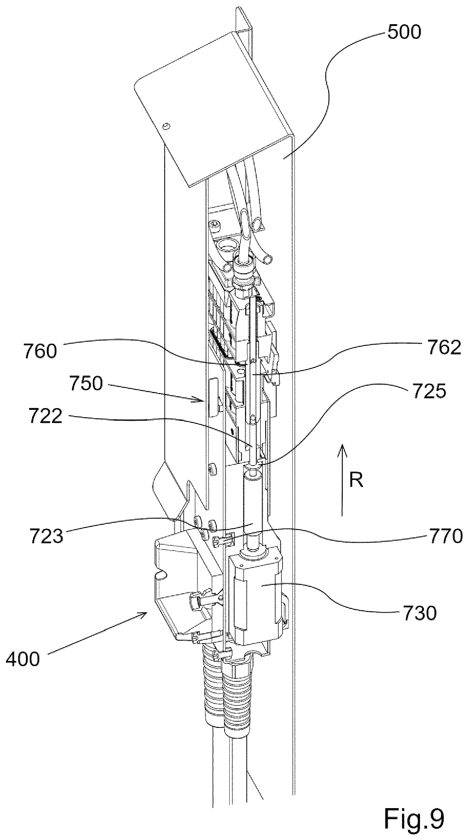

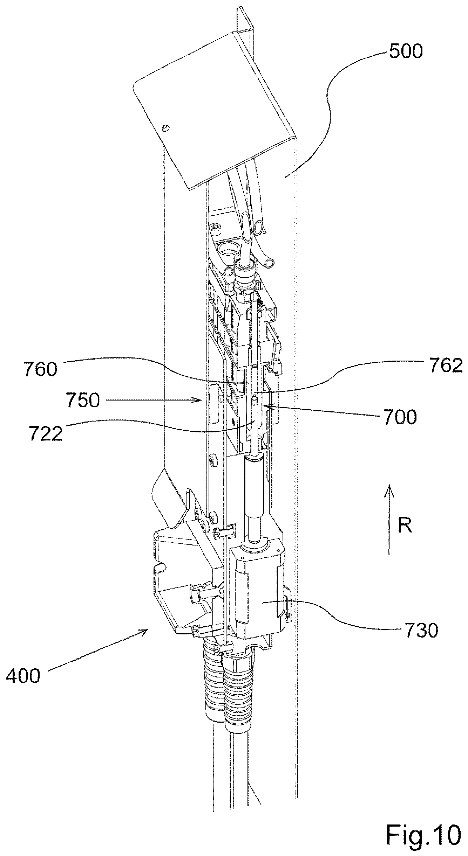

Der Pin 760 wird durch die Relativbewegung der Steckeinheiten 400, 500 in Steckrichtung R in die Bohrung 710 hineingeschoben, bis er auf den Gewindestift 720 trifft. Der Gewindestift 720 tritt dabei mit seiner Zentrierspitze 726 in das Innere des Pins 760 ein, wobei die Zentrierspitze 726 hier eine Zentrierung zwischen Pin 760 und Gewindestift 720 bewirkt. Eine weitere Relativbewegung der Steckeinheiten 400, 500 in Steckrichtung R führt zunächst dazu, dass der Gewindestift 720 gegen die Federkraft der Feder 740, also hin zu dem Motor 730 bewegt wird (Figur 9). Dies erfolgt solange, bis der Sensor 770 den Gewindestift 720 erfasst und ein entsprechendes Signal an eine nicht dargestellte Steuereinheit ausgibt. Wenn die Steuereinheit das entsprechende Signal erhält, wird der Motor 730 von der Steuereinheit aktiviert. Der Motor 730 dreht dann die Motorwelle 732, wodurch der Gewindestift 720 gedreht wird. Diese Drehung bewirkt, dass der Gewindeabschnitt 722 des Gewindestifts 720 in das Innengewinde 762 des Pins 760 hineingedreht wird. Dadurch wird zunächst die Feder 740 entlastet, bis der hintere Bereich 723 des Gewindestifts 720 an dem Anschlag 725 anliegt. Anschließend werden die Steckgruppen 440, 540 zusammengezogen, bis sie aneinander liegen (Figur 10). Dabei werden die Steckkontakte 430, 530 der Steckeinheiten 400, 500 miteinander verbunden. Der Motor 730 kann dann beispielsweise durch ein Signal eines Endschalters (nicht dargestellt) abgeschaltet werden. Der Steckvorgang ist dann abgeschlossen.

Um die Steckeinheiten voneinander zu trennen, wird zunächst der Motor 730 in umgekehrter Richtung betrieben. Dadurch wird der Gewindestift 720 aus dem Innengewinde 762 herausgedreht. Ist das erfolgt, kann die erste Steckeinheit 400 entgegen der Steckrichtung R aus der zweiten Steckeinheit 500 bewegt werden. Die Steckeinheiten 400, 500 sind dann voneinander getrennt.

### Bezugszeichenliste

- 100: ziehendes Fahrzeug
- 110: Fahrwerk
- 112: Rad
- 120: Fahrerkabine
- 130: Montagefläche
- 140: Sattelkupplung

- 200: gezogenes Fahrzeug
- 210: Unterbau
- 220: Chassis
- 230: Fahrwerk
- 232: Rad
- 240: Stützwinde
- 250: Königszapfen
- 270: Aufbau
- 274: Frontseite

- 300: Verbindungssystem

- 400: erste Steckeinheit
- 410: Gehäuse
- 412: Führungselement
- 420: Leitung
- 430: Steckkontakt
- 440: Steckgruppe
- 450: Abdeckung
- 460: Halter

- 500: zweite Steckeinheit
- 510: Gehäuse
- 512: Aufnahmeteil
- 514: Aufnahmeöffnung
- 516: Führungselement
- 520: Leitung
- 530: Steckkontakt
- 540: Steckgruppe
- 550: Halterung
- 560: Vorsprung
- 570: Schiene

- 600: Transporteinrichtung
- 610: Gelenkarmroboter
- 620: Greifer

- 700: Unterstützungseinrichtung
- 710: Bohrung
- 720: Gewindestift
- 721: vorderer Bereich
- 722: Gewindeabschnitt
- 723: hinterer Bereich
- 724: Nut
- 725: Anschlag
- 726: Zentrierspitze
- 730: Motor
- 732: Motorwelle
- 734: Mitnehmer
- 740: Feder
- 750: Sensor
- 752: Sensorelement
- 754: Blech
- 760: Pin
- 762: Innengewinde
- 764: Zentrierfase
- 770: Stiftsensor

- 1000: Gespann

- DB: Innendurchmesser der Bohrung
- DP: Außendurchmesser des Pins
- DS: Außendurchmesser des Gewindestifts
- R: Steckrichtung

## Patentansprüche

1. Gespann mit einem ziehenden Fahrzeug und einem gezogenen Fahrzeug,
wobei das ziehende Fahrzeug und das gezogene Fahrzeug jeweils Schnittstellen zur Übertragung von elektrischer Energie, Druckluft und/oder Daten aufweisen,
wobei ein mehrteiliges Verbindungssystem vorgesehen ist, das eine erste Steckeinheit umfasst, die mit den Schnittstellen des ziehenden Fahrzeugs verbunden ist, und eine zweite Steckeinheit umfasst, die mit den Schnittstellen des gezogenen Fahrzeugs verbunden ist,
wobei die erste Steckeinheit mit der zweiten Steckeinheit temporär verbunden werden kann, um eine Übertragung von elektrischer Energie, Druckluft und/oder Daten zwischen dem ziehenden Fahrzeug und dem gezogenen Fahrzeug zu ermöglichen,
wobei eine Transporteinrichtung vorgesehen ist, welche die erste Steckeinheit derart zu der zweiten Steckeinheit bewegen kann, dass anschließend ein Steckvorgang zwischen erster Steckeinheit und zweiter Steckeinheit erfolgen kann,
**dadurch gekennzeichnet,**
**dass** eine Unterstützungseinrichtung vorgesehen ist, welche den Steckvorgang zwischen erster Steckeinheit und zweiter Steckeinheit unterstützt.

2. Gespann nach einem der vorhergehenden Ansprüche,
**dadurch gekennzeichnet,**
**dass** die Transporteinrichtung einen Handhabungsroboter, bevorzugt einen Gelenkarmroboter, umfasst.

3. Gespann nach einem der vorhergehenden Ansprüche,
**dadurch gekennzeichnet,**
**dass** die Transporteinrichtung temporär mit der ersten Steckeinheit verbunden ist und von dieser gelöst werden kann, wobei bevorzugt die erste Steckeinheit einen Halter und die Transporteinrichtung einen Greifer zum Greifen des Halters aufweist.

4. Gespann nach einem der vorhergehenden Ansprüche,
**dadurch gekennzeichnet,**
**dass** die Unterstützungseinrichtung zwei komplementäre Gewindeteile und einen Motor umfasst, wobei der Motor eines der Gewindeteile drehen kann, wobei die Gewindeteile bevorzugt ein Gewindestift und ein Innengewindeteil sind, wobei das Innengewindeteil ein Pin mit einem Innengewinde ist, welches komplementär zu dem Gewindestift ist, wobei der Pin von einem Grundkörper der zugehörigen Steckeinheit in Steckrichtung weiter vorsteht als sämtliche Steckkontakte dieser Steckeinheit, wobei der Gewindestift in einer Bohrung verläuft, deren Innendurchmesser größer als ein Außendurchmesser des Gewindestifts ist, und wobei ein Außendurchmesser des Pins dem Innendurchmesser der Bohrung im Wesentlichen entspricht und wobei mindestens eines der Gewindeteile entlang einer Steckrichtung verschiebbar und federnd gelagert ist und/oder mindestens eines der Gewindeteile, bevorzugt beide Gewindeteile, endseitig eine Zentrierhilfe, bevorzugt eine Zentrierfase oder Zentrierspitze, aufweist.

5. Gespann nach einem der vorhergehenden Ansprüche,
**dadurch gekennzeichnet,**
**dass** ein Sensor vorgesehen ist, der eine Relativposition der Steckeinheiten entlang der Steckrichtung erfasst und bevorzugt bei Erreichen einer Sollposition ein Signal an eine Steuereinheit übermittelt.

6. Gespann nach einem der Ansprüche 4 oder 5,
**dadurch gekennzeichnet,**
**dass** der Motor und eines der Gewindeteile permanent an der ersten Steckeinheit befestigt sind oder
**dass** der Motor an der Transporteinrichtung und eines der Gewindeteile an der ersten Steckeinheit befestigt sind und die erste Steckeinheit eine Kupplung aufweist, mittels welcher der Motor ein Drehmoment oder eine Kraft auf das Gewindeteil ausüben kann.

7. Gespann nach einem der vorhergehenden Ansprüche,
**dadurch gekennzeichnet,**
**dass** eine Verriegelung vorgesehen ist, welche ein Trennen der ersten Steckeinheit von der zweiten Steckeinheit nach dem Steckvorgang verhindert, wobei bevorzugt
a) die Verriegelung dadurch gebildet wird, dass die Gewindeteile selbsthemmend sind und/oder
b) die Verriegelung dadurch gebildet wird, dass die Verriegelung Rastelemente umfasst und/oder
c) eine Entriegelungseinrichtung vorgesehen ist, welche die Verriegelung überwinden kann.

8. Gespann nach einem der Ansprüche,
**dadurch gekennzeichnet,**
**dass** die Unterstützungseinrichtung einen Pneumatikzylinder umfasst, der an einer der Steckeinheiten befestigt ist und bei der Annäherung an die andere Steckeinheit mit dieser gekoppelt wird.

9. Gespann nach einem der vorhergehenden Ansprüche,
**dadurch gekennzeichnet,**
**dass** die erste Steckeinheit und/oder die zweite Steckeinheit ein Gehäuse umfasst, wobei das Gehäuse bevorzugt nach unten offen ist und/oder das Gehäuse bevorzugt einen mit der jeweils anderen Steckeinheit komplementären Querschnitt aufweist, wobei das Gehäuse bevorzugt endseitig Führungselemente aufweist, die trichterförmig angeordnet sind.

10. Gespann nach einem der vorhergehenden Ansprüche,
**dadurch gekennzeichnet,**
**dass** die erste Steckeinheit und/oder die zweite Steckeinheit Steckkontakte sowie eine Abdeckung für die Steckkontakte aufweist, wobei die Abdeckung bevorzugt einen Abdeckzustand und einen Freigabezustand einnehmen kann, wobei sie in dem Abdeckzustand die Steckkontakte abdeckt und in dem Freigabezustand die Steckkontakte nicht abdeckt.

11. Gespann nach einem der vorhergehenden Ansprüche,
**dadurch gekennzeichnet,**
**dass** eine Ortungseinrichtung vorgesehen ist, mittels der die Position der ersten Steckeinheit und/oder der zweiten Steckeinheit oder deren Relativposition bestimmbar ist, wobei die Ortungseinrichtung bevorzugt eine Kennzeichnung und einen Detektor zum Erfassen der Kennzeichnung aufweist.

12. Gespann nach einem der vorhergehenden Ansprüche,
**dadurch gekennzeichnet,**
**dass** die zweite Steckeinheit an einer Frontseite des gezogenen Fahrzeugs angeordnet ist.

13. Verbindungssystem wie in den Ansprüchen 1 bis 12 definiert.

14. Verfahren zum Kuppeln eines ziehenden Fahrzeugs mit einem gezogenen Fahrzeug mittels einer mechanischen Kupplung und mittels eines mehrteiligen Verbindungssystems nach den Ansprüchen 1 bis 12, wobei die erste Steckeinheit mittels der Transporteinrichtung zu der zweiten Steckeinheit bewegt wird und anschließend ein Steckvorgang zwischen erster Steckeinheit und zweiter Steckeinheit erfolgt, wobei der Steckvorgang zwischen erster Steckeinheit und zweiter Steckeinheit von der Unterstützungseinrichtung mechanisch unterstützt wird, wobei das mechanische Kuppeln mittels der mechanischen Kupplung bevorzugt vor dem Steckvorgang zwischen erster Steckeinheit und zweiter Steckeinheit erfolgt.

15. Verfahren nach Anspruch 14,
**dadurch gekennzeichnet,**
**dass** die Transporteinrichtung nach dem Steckvorgang oder während des Steckvorgangs von der ersten Steckeinheit getrennt wird, wobei die Transporteinrichtung nach der Trennung bevorzugt in eine Standby-Stellung bewegt wird, in welcher sie weniger Platz einnimmt.
